(19) **Europäisches Patentamt European Patent Office Office européen des brevets**

(11) **EP 4 681 939 A1**

(12) **EUROPEAN PATENT APPLICATION**

(43) Date of publication:
21.01.2026 Bulletin 2026/04

(21) Application number: 25185618.3

(22) Date of filing: 26.06.2025

(51) International Patent Classification (IPC):
**B60C 1/00** (2006.01)    **B60C 9/07** (2006.01)
**B60C 9/08** (2006.01)    **B60C 11/00** (2006.01)

(52) Cooperative Patent Classification (CPC):
**B60C 1/0016; B60C 9/07; B60C 9/08;**
**B60C 11/005;** B60C 2009/2016; B60C 2011/0025;
B60C 2011/0348; B60C 2011/0355;
B60C 2011/0367

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 16.07.2024 JP 2024113248

(71) Applicant: **Sumitomo Rubber Industries Ltd.**
**Kobe-shi, Hyogo 651-0072 (JP)**

(72) Inventors:
• **YAMADA, Ayuko**
**Kobe-shi, 651-0072 (JP)**
• **IMAI, Daiki**
**Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **PNEUMATIC TIRE**

(57) Provided is a pneumatic tire, wherein a tread comprises three or more land parts partitioned off by two or more circumferential main grooves. Each of a pair of land parts, including tread ground-contacting ends, has a groove other than the circumferential main grooves. Parameters $A_1$, $A_2$, Ga, Gb, 30°CE*c, and K satisfy;

$$(1)\ |A_2 - A_1| > 0$$

$$(2)\ Ga - Gb > 0$$

$$(3)\ 30°CE^*c > K / \{|A_2 - A_1| \times (Ga - Gb)\}\ (\text{provided that K is 73})$$

**EP 4 681 939 A1**

# FIG. 1

**Description**

TECHNICAL FIELD

The present invention relates to a pneumatic tire.

BACKGROUND OF THE INVENTION

A carcass ply forms a skeleton of a pneumatic tire. As a carcass cord constituting a carcass ply, an organic fiber cord or a steel cord is used, and the carcass ply significantly affects durability, rigidity, and the like of the pneumatic tire. JP 2023-84469 A and WO 2021/123530 describe a pneumatic tire in which a carcass cord is flexed by controlling a direction in which the carcass cord extends.

SUMMARY OF THE INVENTION

However, such a pneumatic tire can be imparted with desired performances by controlling and changing a direction in which a carcass cord extends, whereas there is a concern about deterioration of durability of the pneumatic tire due to concentration of strain on a part sandwiched between a tread and a side part during running.

It is an object of the present invention to suppress deterioration of durability of a pneumatic tire comprising a carcass cord varying in extending direction.

That is, the present invention relates to the following pneumatic tire:

a pneumatic tire comprising
a carcass,
a reinforcing layer arranged on the outer side of the carcass in a tire radial direction, and
a cap tread arranged on the outer side of the reinforcing layer in the tire radial direction,
wherein the carcass is composed of at least one carcass ply that comprises a plurality of carcass cords and a topping rubber covering the carcass cords,
wherein the tread comprises three or more land parts partitioned off by two or more circumferential main grooves,
wherein each of a pair of land parts among the land parts has a groove other than the circumferential main grooves, the pair of land parts including tread ground-contacting ends, and
wherein $A_1$, $A_2$, Ga, Gb, 30°CE*c, and K satisfy the following inequalities (1), (2), and (3),

$$(1)\ |A_2 - A_1| > 0$$

$$(2)\ Ga - Gb > 0$$

$$(3)\ 30°CE^*c > K\,/\,\{|A_2 - A_1| \times (Ga - Gb)\}\ \text{(provided that K is 73)}$$

where $A_1$ represents an angle, in degrees, at which an extending direction of carcass cord of a carcass ply on the outermost side in the tire radial direction among the carcass plies inclines from a tire circumferential direction at a position on a tire center line, $A_2$ represents an angle, in degrees, at which an extending direction of carcass cord of the carcass ply on the outermost side in the tire radial direction among the carcass ply inclines from the tire circumferential direction at a tire maximum width position, Ga represents a groove depth, in mm, of a deepest part of the circumferential main grooves, Gb represents a groove depth, in mm, of a deepest part of the grooves other than the circumferential main grooves, 30°CE*c represents a complex elastic modulus at 30°C, in MPa, of a rubber composition constituting the cap tread, and K represent a constant.

According to the present invention, deterioration of durability of a pneumatic tire comprising a carcass cord varying in extending direction can be suppressed.

BRIEF DESCRIPTION OF THE DRAWINGS

FIG. 1 is a cross-sectional view of a pneumatic tire relating to one embodiment of the present invention, which passes through a tire rotation axis.

FIG. 2 is a cross-sectional view of a tread of a pneumatic tire relating to one embodiment of the present invention, which passes through the tire rotation axis.

FIG. 3 is one example of a developed view of a carcass cord constituting a carcass ply of a pneumatic tire relating to one embodiment of the present invention, which shows an angle formed between an extending direction of the carcass cord and a tire circumferential direction.

FIG. 4 is a variation of a developed view of a carcass cord constituting a carcass ply of a pneumatic tire relating to one embodiment of the present invention, which shows an angle formed between an extending direction of the carcass cord and the tire circumferential direction.

FIG. 5 is a schematic view showing, for a carcass cord constituting a carcass ply of a pneumatic tire relating to one embodiment of the present invention, a preferred range of angle formed between an extending direction of the carcass cord and the tire circumferential direction.

## DETAILED DESCRIPTION

A pneumatic tire that is one embodiment of the present invention will be described below. The pneumatic tire of the present embodiment is a pneumatic tire comprising a carcass, a reinforcing layer arranged on the outer side of the carcass in a tire radial direction, and a cap tread arranged on the outer side of the reinforcing layer in the tire radial direction, wherein the carcass is composed of at least one carcass ply that comprises a plurality of carcass cords and a topping rubber covering the carcass cords, wherein the tread comprises three or more land parts partitioned off by two or more circumferential main grooves, wherein each of a pair of land parts among the land parts has a groove other than the circumferential main grooves, the pair of land parts including tread ground-contacting ends, and wherein $A_1$, $A_2$, Ga, Gb, $30°CE^*c$, and K satisfy the following inequalities (1), (2), and (3),

$$(1)\ |A_2 - A_1| > 0$$

$$(2)\ Ga - Gb > 0$$

$$(3)\ 30°CE^*c > K\ /\ \{|A_2 - A_1| \times (Ga - Gb)\}\ (provided\ K\ is\ 73)$$

where $A_1$ represents an angle, in degrees, at which an extending direction of carcass cord of a carcass ply on the outermost side in the tire radial direction among the carcass plies inclines from a tire circumferential direction at a position on a tire center line, $A_2$ represents an angle, in degrees, at which an extending direction of carcass cord of the carcass ply on the outermost side in the tire radial direction among the carcass ply inclines from the tire circumferential direction at a tire maximum width position, Ga represents a groove depth, in mm, of a deepest part of the circumferential main grooves, Gb represents a groove depth, in mm, of a deepest part of the grooves other than the circumferential main grooves, $30°CE^*c$ represents a complex elastic modulus at 30°C, in MPa, of a rubber composition constituting the cap tread, and K represent a constant.

Although it is not intended to be bound by a theory, in the present invention, the following can be considered as a reason why deterioration of durability is suppressed. That is, in the present invention, strain can be dispersed by providing grooves other than the circumferential main grooves for the land parts including the tread ground-contacting ends on which the strain concentrates in the tread. Additionally, the complex elastic modulus of the rubber composition constituting the cap tread is adjusted depending on an extending direction of the carcass cord and depths of the circumferential main grooves and the grooves other than the circumferential main grooves so that the predetermined relational inequalities are satisfied, whereby it is considered that deterioration of durability of the tire is suppressed.

K is preferably 90.

This is because the inequality (3) is satisfied under a stricter condition.

It is preferable that the rubber composition constituting the cap tread comprises a rubber component and that the rubber component comprises an isoprene-based rubber.

When the rubber composition constituting the cap tread comprises an isoprene-based rubber, it is considered that durability of the tire is further improved.

It is preferable that the grooves other than the circumferential main grooves are circumferential narrow grooves extending in the tire circumferential direction and that groove widths of the circumferential narrow grooves are narrower than groove widths of two circumferential main grooves adjacent to the land parts including the tread ground-contacting ends.

When such a structure as described above is used, strain can be effectively dispersed, so that it is considered that durability of the tire is further improved.

$A_1$, $A_2$, Ga, and Gb preferably satisfy the following inequality (4),

$$(4)\ (Ga - Gb) / |A_2 - A_1| > 0.1.$$

When the difference between Ga and Gb and $|A_2 - A_1|$ are adjusted, a suitable difference in groove depth is set depending on a difference in extending direction of the carcass cord from the viewpoint of dispersion of strain, so that it is considered that durability of the tire is further improved.

The rubber composition constituting the cap tread preferably comprises resin.

The complex elastic modulus at 30°C of the cap tread is suitably adjusted, whereby it is considered that durability of the tire is further improved.

The tread preferably comprises a base tread on the inner side of the cap tread in the tire radial direction.

As compared with a case where the tread is composed of only the cap tread, the base tread makes it easy to achieve all the desired performances, so that durability of the tread is improved and therefore it is considered that durability of the tire is further improved.

It is preferable that the tire comprises at least one reinforcing layer on the outer side of the carcass in the tire radial direction, that each of the reinforcing layers is composed of at least one reinforcing layer ply that comprises a plurality of reinforcing layer cords and a topping rubber covering the reinforcing layer cords, and that, when an angle, in degrees, at which an extending direction of the reinforcing layer cord inclines from the tire circumferential direction in at least any of reinforcing layer plies of the reinforcing layers is referred to as $A_{RF}$, $A_1$ described above is different from $A_{RF}$.

When $A_1$ and $A_{RF}$ are different from each other, it is considered that an extending direction of the tread can be controlled on the inner side of the tread in the tire radial direction to mitigate twist of the arranged carcass ply.

The inclination direction at $A_{RF}$ from the tire circumferential direction is preferably a direction opposite to the inclination direction at $A_1$ from the tire circumferential direction.

When the inclination direction at $A_1$ and the inclination direction at $A_{RF}$ are opposite to each other, it is considered that twist of the carcass ply that is arranged in a biased manner on the inner side of the tread in the tire radial direction can be canceled out.

The reinforcing layer that comprises a reinforcing layer ply in which an angle, in degrees, at which an extending direction of its reinforcing layer cord inclines from the tire circumferential direction is $A_{RF}$ is preferably composed of one reinforcing layer ply.

When the number of reinforcing layer plies is decreased, it is considered that the weight of the tire can be reduced.

The reinforcing layer ply in which an angle, in degrees, at which an extending direction of its reinforcing layer cord inclines from the tire circumferential direction is $A_{RF}$ is preferably a belt ply.

When a reinforcing layer ply is a belt ply, it is considered that the number of reinforcing layer plies can be minimized as required.

The at least one reinforcing layer preferably consists of a belt.

When the number of types of the reinforcing layers is decreased, it is considered that the weight of the tire can be reduced.

The carcass is preferably composed of one carcass ply.

When the number of the carcass plies is decreased, it is considered that the weight of the tire can be reduced.

$A_2$ is preferably +70° or higher and +90° or is preferably lower or - 70° or lower and higher than -90°.

When a range of $A_2$ is as described above, the effects of the present invention can be improved.

<Definition>

A "standardized state" is a state in which the tire is rim-assembled to a standardized rim, filled with air at a standardized internal pressure, and applied with no load. Unless otherwise noted, a tire made to fall into a standardized state is used.

A "dimension of each part of a tire" is a value specified in a standardized state for one appearing on the outer surface of the tire, unless otherwise specified, while it is a value specified, for example, in a condition where the tire is cut on a plane including a tire rotation axis and the cut tire piece is held with a rim width of a standardized rim, for one present inside the tire or on a tire cutting surface.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load, in kg" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by another calculation is defined as a standardized load.

A "maximum load capacity $W_L$, in kg" is calculated by the following equation. "V" represents a virtual volume, in mm$^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load described above.

$$W_L = 0.000011 \times V + 175$$

$$V = \{(Dt/2)^2 - (Dt/2 - Ht)^2\} \times \pi \times Wt$$

A "ground-contacting region" is a region of a tread obtained from a contour when a tire is pressed against the ground. The ground-contacting region is obtained by assembling the tire to a standardized rim, filling the tire with air at a standardized internal pressure, and leaving the tire to stand at 25°C for 24 hours, followed by applying ink to a tire tread surface, applying a standardized load (a load equal to the maximum load capacity) on the tire to perpendicularly press the tire tread surface on cardboard (a camber angle is 0°), and performing transcription of the ink.

A "tread ground-contacting end" refers to an outermost end in a tire width direction in a ground-contacting region.

A "tread ground-contacting width" refers to a distance from one of tread ground-contacting ends to the other of the tread ground-contacting ends along a tread surface.

A "tread" is a member including a part forming a ground-contacting surface of a tire and is a member arranged on an outer side in a tire radial direction with respect to members such as a reinforcing layer, a carcass, and the like, on a cross section of the tire taken along a plane including a tire rotation axis. A "bead part" is a part of the tire that touches a rim to maintain an internal pressure and transmits driving and braking.

A "land part" means a part of a tread at which a tire touches the ground when the tire is pressed against the ground, which is a part of the tread constituting the above-described ground-contacting region.

A "carcass" means a member forming a tire skeleton and is composed of at least one carcass ply that comprises a plurality of carcass cords and a topping rubber covering the carcass cords. An inner member is present on the inner side of the carcass in the tire radial direction. Examples of the inner member include an inner liner, an insulation, and the like.

A "tire maximum width position" refers to a position at which a tire has the maximum width on a cross section in a tire width direction, the maximum width being measured in a standardized state. The tire maximum width position is indicated by P in each drawing.

An "R1 region" refers to a region in which an inclination angle of a carcass cord that is $A_1$ on a tire center line is within a predetermined fluctuation range. A fluctuation range of an inclination angle of a carcass cord allowed in the R1 region means a range of -10% or more and 5% or less for an absolute value of $A_1$ ($|A_1|$). The R1 region straddles the tire center line and does not include a tire maximum width position that is a position at which $A_2$ is measured.

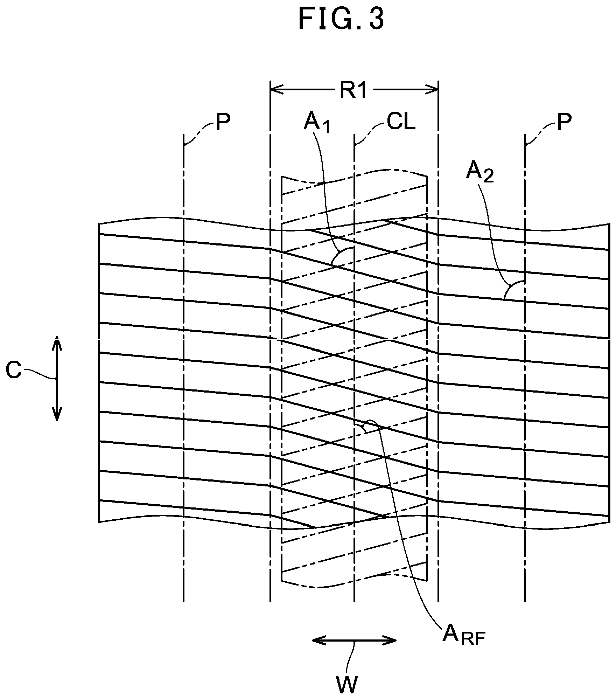

"$A_1$" means an angle, in degrees, at which an extending direction of a carcass cord inclines from a tire circumferential direction at a position on a tire center line and is expressed in a range of higher than -90° and +90° or lower, where the angle is regarded as plus (+) when the extending direction of the carcass cord inclines downward to the right with respect to the tire circumferential direction and the angle is regarded as minus (-) when the extending direction of the carcass cord inclines upward to the right with respect to the tire circumferential direction, when the tire is viewed from the inner-surface side. In a case where there are a plurality of carcass plies, a carcass ply on the outermost side in the tire radial direction is measured. FIG. 3 shows a case where $A_1$ is plus (+). Besides, in a case where its value is a plus value, the symbol "+" may be omitted.

"$A_2$" means an angle, in degrees, at which an extending direction of carcass cord inclines from a tire circumferential direction at a tire maximum width position and is expressed in a range of higher than -90° and +90° or lower, where the angle is regarded as plus (+) when the extending direction of carcass cord inclines downward to the right with respect to the tire circumferential direction and the angle is regarded as minus (-) when the extending direction of carcass cord inclines upward to the right with respect to the tire circumferential direction, when the tire is viewed from the inner-surface side. FIG. 3 shows a case where $A_2$ is plus (+). Besides, in a case where the value is a plus value, the symbol "+" may be omitted. In a case where there are a plurality of corresponding carcass plies, $A_2$ is preferably measured for a carcass ply on the outermost side in the tire radial direction.

A carcass ply for which $A_2$ is to be measured is present so that the carcass ply extends from a tire center line toward both sides in a tire width direction, and the carcass ply shall extend so that at least one side thereof is beyond a tire maximum width position. At this time, the other side of the carcass ply may or may not be beyond the tire maximum width position. In a case where a main body part and turn-up parts of the carcass ply are present at the tire maximum width positions, $A_2$ is measured for a carcass cord of the main body part. Moreover, there is a case where no turn-up part of the carcass ply is present at the tire maximum width positions or where one of the turn-up parts of the carcass ply is present only on one side in the tire width direction. Also in these cases, A2 is measured for a carcass cord of the main body part.

For the main body part and the turn-up parts of the carcass ply, for example, the following cases are assumed:

a: a case where the turn-up parts are present on both sides of the main body part in the tire width direction;

b: a case where the main body part of the carcass ply extends to the tire maximum width positions on both sides in the tire width direction and only one turn-up part is present on one side of the main body part in the tire width direction (no turn-up part is present on the other side of the main body part in the tire width direction);

c: a case where the main body part of the carcass ply extends only to the tire maximum width position on one side in the tire width direction and only one turn-up part is present on the one side of the main body part in the tire width direction (the main body part does not extend to the tire maximum width position on the other side in the tire width direction and no turn-up part is present on the other side in the tire width direction);

d: a case where the main body part of the carcass ply extends to the tire maximum width positions on both sides in the tire width direction and no turn-up parts are present on any of both sides of the main body part in the tire width direction; and

e: a case where the main body part of the carcass ply extends only to the tire maximum width position on one side in the tire width direction and no turn-up parts are present on any of both sides of the main body part in the tire width direction.

In each of the above-described cases a to e, $A_2$ is measured as follows. That is, in the cases a, b, and d, $A_2$ is measured at two positions of the main body part. At least one of these values of $A_2$ has only to satisfy a predetermined requirement. On the other hand, in the cases c and e, $A_2$ is measured at one position of the main body part. The $A_2$ needs to satisfy a predetermined requirement.

A "carcass cord varying in extending direction" mean a carcass cord satisfying the above-described inequality (1), that is, $|A_2 - A_1| > 0$.

A "reinforcing layer" means a member that is provided on the outer side in a tire radial direction with respect to a carcass and on the inner side in the tire radial direction with respect to a tread and that is responsible for an effect of suppressing protrusion of a tire due to internal pressure or rotation and a role in receiving and mitigating an input from a road surface. The reinforcing layer is composed of at least one reinforcing layer ply that comprises a plurality of reinforcing layer cords and a topping rubber covering the reinforcing layer cords. Among the at least one reinforcing layer ply, a reinforcing layer ply arranged the innermost side in the tire radial direction is referred to as an inner-side reinforcing layer ply. Specific examples of the reinforcing layer include a belt, a band, and the like.

A "belt" is one of reinforcing layers and is composed of at least one belt ply. A plurality of belt cords constituting a belt ply are arranged substantially parallel to each other, and an extending direction of the belt cord inclines at 10° or higher relative to a tire circumferential direction. The belt comprises a joint part on the circumference of the tire. Here, the wording "substantially parallel" means that a difference in angle of an extending direction of each belt cord with respect to a tire circumferential direction is within a range of ±3°.

A "band" is one of reinforcing layers and is composed of at least one band ply. A band cord constituting a band ply is arranged in a state where the band cord is helically wound in a tire circumferential direction, and an angle at which an extending direction of the band cord inclines relative to a tire circumferential direction remains within a range of ±5°. The band does not comprise any joint part on the circumference of the tire. Among bands, there are a full band covering the entire tread and an edge band covering only an edge part of the tread.

"$A_{RF}$" means an angle, in degrees, at which an extending direction of a reinforcing layer cord of a reinforcing layer ply inclines from a tire circumferential direction and is expressed in a range of higher than -90° and +90° or lower, where the angle is regarded as plus (+) when the extending direction of the carcass cord inclines downward to the right with respect to the tire circumferential direction and the angle is regarded as minus (-) when the extending direction of the carcass cord inclines upward to the right with respect to the tire circumferential direction, when the tire is viewed from the inner-surface side. FIG. 3 shows a case where $A_{RF}$ is minus (-). Besides, in a case where its value is a plus value, the symbol "+" may be omitted.

A "groove" refers to a recessed part that is formed on a tread surface of a tire (and that extends toward the inner side in the tire radial direction), where the recessed part has an opening width of 2.0 mm or more on a tread surface. A recessed part having an opening width less than 2.0 mm or more on a tread surface is referred to as a "sipe".

A "circumferential main groove" refers to a groove extending continuously in a tire circumferential direction and having a maximum groove width that is 2.5% or more of a tread ground-contacting width, and land parts of the tread are partitioned off by circumferential main grooves. The circumferential main groove may extend linearly along the circumferential direction or may extend in a wavy, sinusoidal, or zigzag shape along the circumferential direction.

A "groove other than circumferential main grooves" refers to a groove among grooves that is not a circumferential main groove, and examples of such a groove include a lateral groove, a lug groove, a circumferential narrow groove, and the like. The groove other than circumferential main grooves may extend continuously in a tire circumferential direction or in a tire width direction or may be discontinuous halfway. The groove other than circumferential main grooves may communicate with a circumferential main groove or a tread ground-contacting end or may be a closed groove that does not communicate with a circumferential main groove or a tread ground-contacting end.

A "circumferential narrow groove" refers to a groove having a maximum groove width that is less than 2.5% of a tread ground-contacting width among grooves extending in a tire circumferential direction. The circumferential narrow groove may extend linearly along the circumferential direction or may extend in a wavy, sinusoidal, or zigzag shape along the circumferential direction. The circumferential narrow groove may extend continuously in the tire circumferential direction or may be discontinuous halfway.

A "lateral groove" refers to a groove extending in a tire width direction. Here, the wording "extending in a tire width direction" means that an angle formed between a line segment connecting its starting point and its end point and the tire width direction is lower than 45°. In a case where the groove extends up to a tread ground-contacting end, the tread ground-contacting end shall be its starting point or end point.

"Groove widths of a circumferential main groove and a circumferential narrow groove" each refers to a width at an opening part on each tread surface, and in a case where the groove width varies in a longitudinal direction of the groove, the groove width shall refer to the maximum value of a groove width perpendicular to the longitudinal direction in mint condition of a tire.

A "groove depth" refers to a linear distance between a straight line connecting ends of the grooves on a tread surface and a lowest part of the groove in the tire radial direction on a cross section of a tire taken along a plane including a tire rotation axis. In a case where the groove depth of the groove varies in the tire width direction and/or in the circumferential direction, the groove depth of the circumferential groove shall be the maximum value of the linear distance.

"Ga" is a groove depth, in mm, of a deepest part of circumferential main grooves, and "Gb" is a groove depth, in mm, of a deepest part of grooves other than the circumferential main grooves, the grooves other than the circumferential main grooves being provided for land parts including tread ground-contacting ends.

<Measuring method>

"30°C E*c" is a complex elastic modulus at 30°C, in MPa, of a rubber composition constituting a cap tread and is measured using a dynamic viscoelasticity measuring device (for example, EPLEXOR series manufactured by gabo Systemtechnik GmbH), under a condition of a temperature at 30°C, a frequency of 10 Hz, an initial strain of 5%, a dynamic strain of $\pm 1\%$, and an extension mode. A sample is a vulcanized rubber composition having a length of 20 mm, a width of 4 mm, and a thickness of 1 mm. When a sample is prepared by being cut out from a tire, a length direction of the sample is configured to coincide with a tire circumferential direction, and a thickness direction of the sample is configured to coincide with a tire radial direction.

Each of "$A_1$ and $A_2$" is determined as an average of angles measured for four different cords. Selection of the four cords is performed preferably by selecting arbitrary four cords, more preferably by selecting four cords spaced at equal intervals of approximately 90° in a tire circumferential direction. In this case, although there is no need to use the same cord for measurement of $A_1$ and $A_2$, it is further preferable that a cord used for measurement of $A_1$ is the same as a cord used for measurement of $A_2$.

"$A_{RF}$" is determined as an average of angles measured for four different cords. Selection of the four cords is performed preferably by selecting arbitrary four cords, more preferably by selecting four cords spaced at equal intervals of approximately 90° in a tire circumferential direction.

A "glass transition temperature of a rubber component" means a static glass transition temperature of each rubber component calculated by a differential scanning calorimeter (for example, Q200 manufactured by TA Instruments Japan Inc.).

A "styrene content" is calculated by pyrolysis gas chromatography or NMR measurement ($^1$H-NMR or $^{13}$C-NMR). For an ingredient amount such as a "styrene content", there is a true value that does not depend on any measuring methods, unlike physical property values such as a complex elastic modulus (E*) and the like. Therefore, it is preferable to use a measuring method that is as highly accurate as possible. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" is calculated by pyrolysis gas chromatography or NMR measurement ($^1$H-NMR or $^{13}$C-NMR). Also for a "vinyl content", there is a true value that does not depend on any measuring methods, like a "styrene content". Therefore, it is preferable to use a measuring method that is as highly accurate as possible.

A "cis content (cis-1,4-bond butadiene unit amount)" is a value measured by infrared absorption spectrometry in accordance with JIS K 6239-2:2017 or NMR measurement ($^1$H-NMR or $^{13}$C-NMR) and is applied to a rubber component having a repeating unit derived from butadiene such as, for example, a BR and the like. Also for a "cis content", there is a true value that does not depend on any measuring methods, like a "styrene content". Therefore, it is preferable to use a measuring method that is as highly accurate as possible.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area ($N_2SA$) of carbon black" is measured according to JIS K 6217-2:2017.

A "nitrogen adsorption specific surface area ($N_2SA$) of silica" is measured by a BET method according to ASTM D3037-93.

An "average primary particle size" is values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "$4\times$(area of particle)$/\pi$") calculated from a microscope image is defined as a particle size.

A "plasticizing agent" is a material giving a rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry.

A "content of a plasticizing agent" also includes an amount of a plasticizing agent that is contained in a rubber component extended by the plasticizing agent.

A "softening point of resin" is a temperature at which a sphere drops when the softening point specified in JIS K 6220-1:2015 7.7 is measured with a ring and ball softening point measuring device.

An embodiment will be described below in further detail. However, the following descriptions are illustrative for explaining the present invention, and the present invention is not limited to the content of these descriptions. Moreover, although the embodiment will be described by appropriately using the drawings, the drawings are merely illustrative.

<Tire>

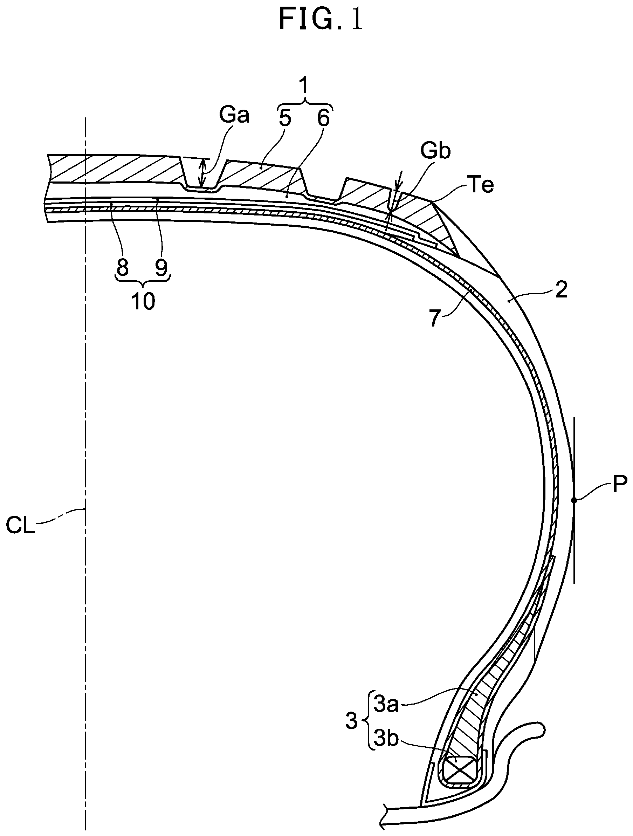

A tire in FIG. 1 consists of a tread 1, a sidewall 2, and a bead part 3 and comprises a cap tread 5, a base tread 6, a carcass 7, and a reinforcing layer 10. The bead part comprises a bead apex 3a and a bead core 3b. The reinforcing layer 10 is composed of a belt 8 and a band 9. The carcass 7 is composed of one carcass ply that comprises a plurality of carcass cords and a topping rubber covering the carcass cords. The belt 8 is composed of one belt ply that comprises a plurality of belt cords and a topping rubber covering the belt cords. The band 9 is composed of one band ply that comprises a plurality of band cords and a topping rubber covering the band cords. In the tire, the belt ply constituting the belt 8 is an inner-side reinforcing layer ply. A groove depth, in mm, of a deepest part of circumferential main grooves is denoted by Ga, and a groove depth, in mm, of a deepest part of grooves other than the circumferential main grooves, which are provided for land parts including tread ground-contacting ends, is denoted by Gb. The tire maximum width position is denoted by P.

In the tire in FIG. 1, although the carcass 7 may be composed of a plurality of carcass plies, the carcass 7 is composed of preferably a smaller number of carcass plies, more preferably one carcass ply, from the viewpoint of a reduction of tire weight. Although the belt 8 may be composed of a plurality of belt plies, the belt 8 is composed of preferably a smaller number of belt plies, more preferably one belt ply, from the viewpoint of a reduction of tire weight. Although the band 9 may be composed of a plurality of band plies, the band 9 is composed of preferably a smaller number of band plies, more preferably one band ply, from the viewpoint of a reduction of tire weight. Besides, both belt 8 and band 9 constitute the reinforcing layer 10. Although the reinforcing layer 10 may be composed of a plurality of reinforcing layer plies, the reinforcing layer 10 is composed of preferably a smaller number of reinforcing layer plies, preferably one reinforcing layer ply, from the viewpoint of a reduction of tire weight.

In the tire of the present embodiment, the reinforcing layer may comprise both a belt and a band or may consist of a belt or a band. Among them, the reinforcing layer preferably consists of a belt.

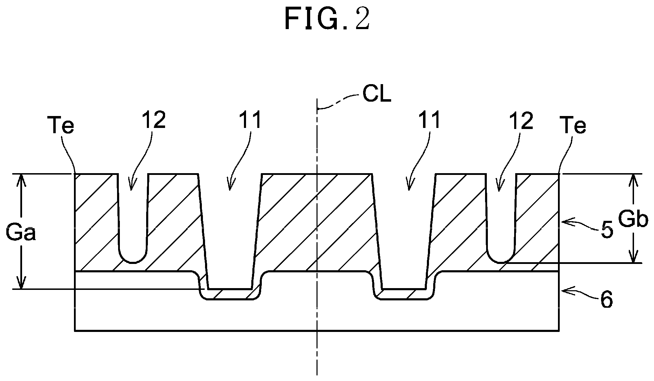

FIG. 2 shows a cross section of a tread passing through a tire rotation axis. The tread relating to the present embodiment comprises a cap tread including a tread ground-contacting surface and preferably comprises a base tread on the inner side of the cap tread in a tire radial direction. The tread has three or more land parts partitioned off by two or more circumferential main grooves 11. In FIG. 2, each of a pair of land parts each formed between a circumferential main groove 11 and a tread ground-contacting end Te has a circumferential narrow groove 12. In FIG. 2, the tread comprises a cap tread 5 and a base tread 6. In FIG. 2, although the base tread 6 is adjacent to the inner side of the cap tread 5 in the tire radial direction and is adjacent to the outer side of the reinforcing layer in the tire radial direction, the present invention is not limited to such an aspect, and one or more rubber layers may be further present between the cap tread 5 and the base tread 6 or between the base tread 6 and the reinforcing layer.

Although a groove 12 other than the circumferential main grooves, which is provided for a land part including a tread ground-contacting end, may be a circumferential narrow groove or a lateral groove, the groove 12 is preferably a circumferential narrow groove. In a case where the groove provided for the land part including the tread ground-contacting end Te is a circumferential narrow groove, a maximum groove width of the circumferential narrow groove is preferably narrower than groove widths of two circumferential main grooves adjacent to the land parts including the tread ground-contacting ends.

A groove depth Ga of a deepest part of the circumferential main grooves is preferably 5.0 mm or more, more preferably 5.5 mm or more, further preferably 6.0 mm or more. On the other hand, Ga is preferably 12.0 mm or less, more preferably 10.0 mm or less, further preferably 9.0 mm or less.

A groove depth Gb of a deepest part of grooves other than the circumferential main grooves, which are provided for land parts including tread ground-contacting ends Te, is preferably 1.0 mm or more, more preferably 1.5 mm or more, further preferably 2.0 mm or more. On the other hand, Gb is preferably 8.0 mm or less, more preferably 6.0 mm or less, further preferably 5.0 mm or less.

FIG. 3 shows a developed view of a carcass ply viewed from an inner-surface side of a tire, which shows an angle formed between an extending direction of the carcass ply and a tire circumferential direction. In FIG. 3, W for the horizontal direction indicates a tire width direction, C for the vertical direction indicates the tire circumferential direction, and a direction perpendicular to a paper surface indicates the tire radial direction. FIG. 3 shows an aspect viewed from the inner-surface side of the tire. The carcass ply comprises a plurality of carcass cords and a topping rubber covering the carcass cords, and the carcass cords are shown by the solid lines in FIG. 3. An angle at which an extending direction of the carcass cord in FIG. 3 inclines from the tire circumferential direction is $A_2$ at one of tire maximum width positions P, is $A_1$ at a position on a tire center line after the carcass cord flexes, and becomes $A_2$ at the other of tire maximum width positions P after the carcass cord further flexes in the opposite direction. Besides, a component indicated by the two-dot chain line is an inner-side reinforcing layer ply that comprises a plurality of reinforcing layer cords and a topping rubber covering the reinforcing layer cords, specifically a belt ply.

The angle, in degrees, at which the extending direction of the carcass cord inclines from the tire circumferential direction at the position on the tire center line CL is denoted by $A_1$, and the angle, in degrees, at which the extending direction of the carcass cord inclines from the tire circumferential direction at the tire maximum width positions P is denoted by $A_2$. Since the extending direction of the carcass cord inclines downward to the right with respect to the tire circumferential direction when viewed form the inner-surface side of the tire, both of $A_1$ and $A_2$ have plus (+) values. On the other hand, an angle, in degrees, at which an extending direction of the reinforcing layer cord inclines from the tire circumferential direction is denoted by $A_{RF}$. Since the extending direction of the reinforcing layer cord inclines upward to the right with respect to the tire circumferential direction when viewed form the inner-surface side of the tire, $A_{RF}$ has a minus (-) value.

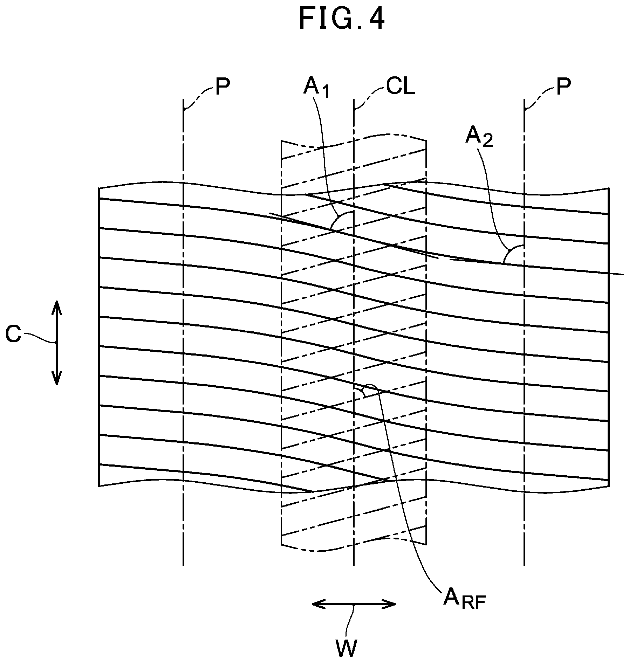

FIG. 4 is a developed view of a carcass cord constituting a carcass ply, which represents an angle formed between an extending direction of the carcass cord and the tire circumferential direction, and FIG. 4 shows a variation of FIG. 3. FIG. 4 also shows an aspect viewed from the inner-surface side of the tire. The extending direction of the carcass cord in FIG. 4 smoothly changes halfway. An angle at which an extending direction of the carcass cord in FIG. 4 inclines from the tire circumferential direction is $A_2$ at one of the tire maximum width positions P, is $A_1$ at the position on the tire center line after the extending direction of the carcass cord smoothly changes, and becomes $A_2$ at the other of the tire maximum width positions P after the extending direction of the carcass cord further smoothly changes in the opposite direction. In FIG. 4, an angle, in degrees, at which the extending direction of the carcass cord inclines from the tire circumferential direction of a tangent line at the position on the tire center line CL is denoted by $A_1$, and an angle, in degrees, at which the extending direction of the carcass cord inclines from the tire circumferential direction of the tangent line at the tire maximum width positions P is denoted by $A_2$. The other configurations are the same as in the case of FIG. 3.

In the tire of the present embodiment, a width of an R1 region in which an inclination angle of the carcass cord that is $A_1$ on the tire center line is within a predetermined fluctuation range is preferably 30% or more of a tread ground-contacting width. The width of the R1 region is more preferably 50% or more, further preferably 70% or more, further preferably 90% or more, of the tread ground-contacting width. On the other hand, the width of the R1 region is preferably 100% or less of the tread ground-contacting width.

Materials for the carcass cord and the reinforcing layer cord are not particularly limited, examples of which include, for example, a metal cord (a steel cord and the like), an organic fiber cord, an inorganic fiber cord (excluding metal cords), and the like.

The metal cord may be a single monofilament cord (that is, a cord having a $1 \times 1$ structure and consisting of one filament) or may have a plurality of filaments. In a case where one metal cord has a plurality of filaments, the metal cord preferably has a twist structure in which these filaments are twisted together along their longitudinal direction. The twist structure is not particularly limited, and can be, for example, a single-twist metal cord having a $1 \times N$ structure or a layer-twist metal cord having an M+N structure.

A filament constituting the organic fiber cord is not particularly limited, examples of which include, for example, a polyester fiber, a nylon fiber, an aramid fiber, a polyketone fiber, a polyparaphenylene acrylate fiber, a polyacrylate fiber, a rayon fiber, a cellulose fiber, a carbon fiber, and the like, and the polyester fiber is preferable. These organic fibers may be formed of a synthetic fiber, a biomass-derived fiber, a recycled/regenerated fiber, or the like. These organic fibers may be used alone, or two or more thereof may be used in combination. Besides, the organic fiber cord can be one formed by twisting together a plurality of yarns obtained by twisting a plurality of filaments together.

Examples of the inorganic fiber cord other than metal cords include a carbon fiber cord, a glass fiber cord, and the like.

(Inequality (1))

In the present embodiment, $|A_2 - A_1|$ is higher than 0. That is, in the tire of the present embodiment, in a case where both of $A_1$ and $A_2$ are 90°, $|A_2 - A_1| = 0$, but $|A_2 - A_1| > 0$ is satisfied since $A_1$ and $A_2$ are at least different from each other in the tire of the present embodiment. In the present embodiment, a value of $|A_2 - A_1|$ is not particularly limited as long as it is higher than 0, but the value is usually lower than 60° or may be lower than 50°, lower than 40°, lower than 30°, lower than 20°, lower than 15°, or 10° or lower. On the other hand, the value is preferably higher than 1°, more preferably higher than 3°, further preferably 5° or higher.

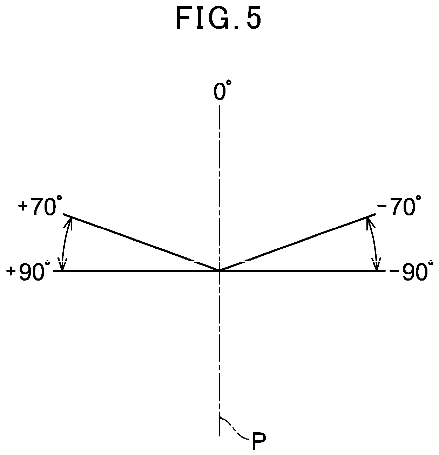

Moreover, $A_2$ is preferably +70° or higher and +90° or lower or -70° or lower and higher than -90°. FIG. 5 shows, as a schematic view for a carcass cord constituting a carcass ply which is represented from the inner-surface side of the tire, a preferred range of angle formed between an extending direction of the carcass cord and the tire circumferential direction. The phrase "$A_2$ is +70° or higher and +90° or lower or -70° or lower and higher than -90°" means that the extending direction of the carcass cord is within a range of the arched double arrow in FIG. 5. When the range of $A_2$ is as described above, the effects of the present invention can be improved. For $A_2$ that is +70° or higher and +90° or lower, its lower limit is more preferably +75° or higher, further preferably +80° or higher, whereas its upper limit is more preferably +85° or lower. For $A_2$ that is -70° or lower and higher than -90°, its upper limit is more preferably -75° or lower, further preferably -80° or lower, whereas its lower limit is more preferably -85° or higher.

(Inequality (2))

In the present embodiment, Ga - Gb is greater than 0. Ga - Gb is preferably greater than 0.50, more preferably greater than 1.0, further preferably greater than 1.5, particularly preferably greater than 2.0, from the viewpoint of the effects of the present invention. On the other hand, an upper limit of the value is, but not particularly limited to, usually 7.0 or less, preferably 6.0 or less, more preferably 5.0 or less, further preferably 4.0 or less, from the viewpoint of a tread balance.

(Inequality (3))

In 30°C $E^*c > K/\{|A_2 - A_1| \times (Ga - Gb)\}$, a value of K is 73, preferably 80, more preferably 90, further preferably 100, further preferably 110, further preferably 120, further preferably 130. On the other hand, an upper limit of the value of K is, but not particularly limited to, usually about 1000, or is about 500 or about 250.

(Inequality (4))

(Ga - Gb) / |$A_2$ - $A_1$| is preferably greater than 0.1, more preferably greater than 0.2, further preferably greater than 0.4. On the other hand, an upper limit of the value is, but not particularly limited to, usually 3.0 or less, preferably 2.0 or less.

(30°CE*c)

Although a complex elastic modulus at 30°C, 30°CE*c, of a rubber composition constituting the cap tread is not particularly limited as long as the inequality (3) is satisfied, 30°C E*c is preferably 2.5 MPa or more, more preferably 3.0 MPa or more, more preferably 3.5 MPa or more, particularly preferably 4.0 MPa or more. On the other hand, 30°CE*c is preferably 20.0 MPa or less, more preferably 15.0 MPa or less, further preferably 13.0 MPa or less.

Besides, 30°CE*c can be appropriately adjusted depending on types or compounding amounts of a rubber component, a filler, a plasticizing agent, and the like which will be described below. For example, 30°CE*c can be increased by increasing an amount of the filler in the rubber composition, decreasing a content of the plasticizing agent, or the like.

(ARF)

In at least any of the reinforcing layer plies, $A_{RF}$ that is an angle at which the extending direction of the reinforcing layer cord inclines from the tire circumferential direction is preferably different from $A_1$, and particularly, the inclination direction at $A_{RF}$ from the tire circumferential direction is preferably a direction opposite to the inclination direction at $A_1$ from the tire circumferential direction. This is because twist of the carcass ply that is arranged in a biased manner on the inner side of the tread in the tire radial direction can be canceled out.

A reinforcing layer including a reinforcing layer ply for which an angle, in degrees, at which an extending direction of reinforcing layer cord inclines from the tire circumferential direction is $A_{RF}$ is preferably composed of one reinforcing layer ply. Or a reinforcing layer including a reinforcing layer ply for which an angle, in degrees, at which an extending direction of reinforcing layer cord inclines from the tire circumferential direction is $A_{RF}$ is preferably a belt ply. In a case where there are a plurality of reinforcing layer plies, a reinforcing layer ply for which measurement of $A_{RF}$ is performed is preferably a reinforcing layer ply located on the innermost side in the tire radial direction.

<Rubber composition constituting cap tread>

A rubber composition constituting a cap tread of a pneumatic tire relating to the present embodiment (which is hereinafter referred to as the "rubber composition relating to the present embodiment") will be described. Besides, in a case where a tread comprises a base tread on the inner side of the cap tread in the tire radial direction, a rubber composition constituting the base tread can be prepared by appropriately compounding a rubber component, a filer, a plasticizing agent, other compounding agents, and the like which will be described below and by appropriately adjusting compounding amounts thereof.

(Rubber component)

A rubber component preferably comprises a diene-based rubber. As the diene-based rubber, any rubber components can be appropriately used which are commonly used in the tire industry. Specifically, examples of the diene-based rubber include an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination. The rubber composition relating to the present embodiment preferably comprises an isoprene-based rubber, more preferably comprises an isoprene-based rubber and an SBR, further preferably comprises an isoprene-based rubber, an SBR, and a BR, and particularly preferably consists of an isoprene-based rubber, an SBR, and a BR.

(Isoprene-based rubber)

As an isoprene-based rubber, for example, those common in the tire industry can be used, such as an isoprene rubber (IR), a natural rubber, and the like. Examples of the natural rubber include not only a non-modified natural rubber (NR) but also a modified natural rubber such as an epoxidized natural rubber (ENR), a hydrogenated natural rubber (HNR), a deproteinized natural rubber (DPNR), an ultra pure natural rubber, a grafted natural rubber, and the like. The isoprene-based rubbers may be used alone, or two or more thereof may be used in combination.

The NR is not particularly limited, and those common in the tire industry can be used, examples of which include, for example, SIR20, RSS#3, TSR20, and the like.

A content of an isoprene-based rubber in the rubber component is preferably 5% by mass or more, more preferably 10% by mass or more, further preferably 15% by mass or more. Moreover, the content of the isoprene-based rubber in the rubber component is preferably 50% by mass or less, more preferably 40% by mass or less, further preferably 30% by mass or less.

(SBR)

The SBR is not particularly limited, and a non-modified solution-polymerized SBR (S-SBR), a non-modified emulsion-polymerized SBR (E-SBR), and the like can be used. Among them, the S-SBR is preferable. Moreover, modified SBRs (a modified S-SBR, a modified E-SBR) and the like can also be used. Examples of the modified SBR include an SBR modified at its terminal and/or main chain using a compound having a functional group described below (a modifying agent); a modified SBR coupled with tin, a silicon compound, etc. (a modified SBR of condensate or having a branched structure, etc.); and the like. Furthermore, hydrogenated ones of these SBRs (hydrogenated SBRs) and the like can also be used. The SBRs may be used alone, or two or more thereof may be used in combination.

The functional group of the modifying agent is preferably a functional group including at least one element selected from the group consisting of silicon, nitrogen, and oxygen. Examples of such a functional group include, for example, an amino group, an amido group, a silyl group, an alkoxysilyl group, an isocyanate group, an imino group, an imidazole group, an urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group (preferably an alkoxy group having 1 to 6 carbon atoms), a hydroxyl group, an oxy group, an epoxy group, and the like, and an amino group and /or alkoxysilyl group are preferable. The amino group is preferably an amino group that is substituted with one or two alkyl groups having 1 to 6 carbon atoms. Specific examples of the alkoxysilyl include, for example, trimethoxysilyl, triethoxysilyl, triisopropoxysilyl, dimethoxymethylsilyl, diethoxymethylsilyl, dimethylmethoxysilyl, dimethylethoxysilyl, and the like.

An oil-extended SBR or a non-oil extended SBR can be used as an SBR. As the SBR that can be used in the present embodiment, those commercially available from JSR Corporation, Sumitomo Chemical Co., Ltd., Ube Corporation, Asahi Kasei Corporation, ZS Elastomer Co., Ltd., ARLANXEO, etc. can be used.

A styrene content of an SBR is preferably 20% by mass or more, more preferably 25% by mass or more, further preferably 28% by mass or more. Moreover, the styrene content of the SBR is preferably 40% by mass or less, more preferably 35% by mass or less, further preferably 33% by mass or less. Besides, the styrene content of the SBR is measured by the above-described measuring method.

A vinyl content of an SBR is preferably greater than 10 mol%, more preferably greater than 15 mol%, further preferably greater than 20 mol%, from the viewpoint of securing hysteresis loss. Moreover, the vinyl content of the SBR is preferably less than 35 mol%, more preferably less than 30 mol%, further preferably less than 25 mol%, from the viewpoint of fuel efficiency. Besides, the vinyl content of the SBR is measured by the above-described measuring method.

A weight-average molecular weight (Mw) of an SBR is preferably greater than 80000, more preferably greater than 100000, further preferably greater than 150000, particularly preferably greater than 500000, from the viewpoint of the effects of the present invention. Moreover, Mw is preferably less than 2000000, more preferably less than 1500000, further preferably less than 1100000, from the viewpoints of cross-linking uniformity, etc. Besides, the Mw of the SBR is measured by the above-described measuring method.

A content of an SBR in the rubber component is preferably 40% by mass or more, more preferably 50% by mass or more, further preferably 60% by mass or more, particularly preferably 70% by mass or more. Moreover, the content of the SBR in the rubber component is preferably 90% by mass or less, more preferably 85% by mass or less, further preferably 80% by mass or less.

(BR)

A BR is not particularly limited, and those common in the tire industry can be used, such as, for example, a BR having a cis content less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. These BRs may be used alone, or two or more thereof may be used in combination.

As the high cis BR, for example, those commercially available form Zeon Corporation, UBE Corporation, JSR Corporation, etc. can be used. When the rubber composition comprises a high cis BR, a low temperature property and abrasion resistance can be improved. A cis content of a high cis BR is preferably greater than 90 mol%, more preferably greater than 95 mol%, further preferably 96 mol% or more. Besides, a cis content of a BR is measured by the above-described measuring method.

The rare-earth-based BR is synthesized using a rare-earth element-based catalyst and has a vinyl content of preferably less than 1.8 mol%, more preferably less than 1.6 mol%, further preferably 1.5 mol% or less, and a cis content of preferably greater than 95 mol%, more preferably 96 mol% or more, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

Examples of the modified BR include BRs modified with the same functional groups as described above for the SBR, and the like, and a modified butadiene rubber (modified BR) modified at its terminal and/or main chain with a functional group comprising at least one element selected from the group consisting of silicon, nitrogen, and oxygen can also be appropriately used.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of a BR is preferably greater than 300000, more preferably greater than 350000, further preferably greater than 400000, from the viewpoint of abrasion resistance. Moreover, it is preferably less than 2000000, more preferably less than 1000000, further preferably less than 700000, from the viewpoints of cross-linking uniformity, etc. Besides, the Mw can be calculated by the above-described method.

A content of a BR in the rubber component is preferably 5% by mass or more, more preferably 8% by mass or more, further preferably 10% by mass or more. Moreover, the content of the BR in the rubber component is preferably 40% by mass or less, more preferably 30% by mass or less, further preferably 20% by mass or less.

(Other rubber components)

The rubber component may comprise a rubber component other than diene-based rubbers (non-diene-based rubbers) as long as it does not affect the effects of the present invention. As a non-diene-based rubber, a rubber component commonly used in the tire industry can be used, examples of which include, for example, a butyl-based rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination.

Moreover, besides the above-described rubber components, the rubber composition may or may not comprise a known thermoplastic elastomer.

(Rubber component synthesized from recycle-derived/biomass-derived raw material)

A monomer that is a structural unit of a synthetic rubber such as an IR, an SBR, a BR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1,3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, combinations thereof, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1 \times 10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

(Filler)

The rubber composition relating to the present embodiment preferably comprises a filler. The filler preferably comprises silica and more preferably comprises carbon black and silica. Moreover, the filler may be a filler consisting of carbon black and silica.

<<Carbon black>>

Examples of carbon black include, but not particularly limited to, N134, N110, N220, N234, N219, N339, N330, N326, N351, N550, N762, and the like. A raw material of carbon black may be a biomass material such as lignin, vegetable oil, and the like or may be pyrolysis oil obtained by pyrolyzing a waste tire, from the viewpoints of a life cycle assessment, etc. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. The carbon black may be used alone, or two or more thereof may be used in combination.

Moreover, as carbon black other than the above-described carbon black, carbon black made from a biomass material such as lignin and the like, or a recovered carbon black obtained by pyrolyzing a product comprising carbon black such as a tire and the like followed by refining may be used from the viewpoints of a life cycle assessment, etc.

In the present specification, the term "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight lost content due to the oxidative combustion of the recovered carbon black is 87% by mass or less. The recovered carbon black may be expressed by rCB.

A recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193).

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface.

As the recovered carbon black, those commercially available from Strebl Green Carbon Pte Ltd., LD Carbon, etc. can be used.

A nitrogen adsorption specific surface area ($N_2SA$) of carbon black is preferably greater than 80 $m^2/g$, more preferably greater than 90 $m^2/g$, further preferably greater than 100 $m^2/g$, particularly preferably greater than 110 $m^2/g$, from the viewpoint of reinforcing property. Moreover, it is preferably less than 200 $m^2/g$, more preferably less than 150 $m^2/g$, further preferably less than 120 $m^2/g$, from the viewpoints of heat generation and processability. Besides, the $N_2SA$ of carbon black is measured by the above-described measuring method.

An average primary particle size of carbon black is preferably 15 nm or more, more preferably 18 nm or more, further preferably 20 nm or more. Moreover, the average primary particle size is preferably 80 nm or less, more preferably 50 nm or less, further preferably 40 nm or less. Besides, the average primary particle size of carbon black is measured by the above-described measuring method.

A content of carbon black is preferably greater than 3 parts by mass, more preferably greater than 5 parts by mass, further preferably greater than 9 parts by mass, based on 100 parts by mass of the rubber component, from the viewpoint of reinforcing property. Moreover, the content of the carbon black is preferably less than 40 parts by mass, more preferably less than 20 parts by mass, further preferably less than 15 parts by mass, from the viewpoint of processability.

<Silica>

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than 100 $m^2/g$, more preferably greater than 150 $m^2/g$, further preferably greater than 170 $m^2/g$, from the viewpoint of reinforcing property. Moreover, it is preferably less than 250 $m^2/g$, more preferably less than 200 $m^2/g$, further preferably less than 180 $m^2/g$, from the viewpoints of heat generation and processability. Besides, the $N_2SA$ of silica is measured by the above-described measuring method.

An average primary particle size of silica is preferably greater than 10 nm, more preferably greater than 12 nm, further preferably greater than 15 nm, from the viewpoint of reinforcing property. Moreover, the average primary particle size is preferably less than 25 nm, more preferably less than 20 nm. Besides, the average primary particle size of silica is measured by the above-described measuring method.

A content of silica based on 100 parts by mass of the rubber component is preferably 50 parts by mass or more, more preferably 60 parts by mass or more, further preferably 70 parts by mass or more, from the viewpoint of wet grip performance. Moreover, the content of silica based on 100 parts by mass of the rubber component is preferably less than 150 parts by mass, more preferably less than 120 parts by mass, further preferably less than 110 parts by mass.

A content ratio of silica in the filler is preferably greater than 50% by mass, more preferably greater than 60% by mass, further preferably greater than 70% by mass, particularly preferably greater than 80% by mass. Moreover, an upper limit value of the content ratio of silica in the filler is, but not particularly limited to, preferably less than 98% by mass, more preferably less than 96% by mass, from the viewpoint of compounding carbon black and the like.

<Other fillers>

The filler may comprise another filler other than carbon black and silica. The other filler is not particularly limited, and as the other filler, those conventionally and commonly used in the tire industry can be compounded, such as, for example, aluminum hydroxide, calcium carbonate, alumina, clay, talc, and the like.

<Silane coupling agent>

The silica is preferably used in combination with a silane coupling agent. The silane coupling agent is not particularly limited, and examples of the silane coupling agent include, for example, a sulfide-based silane coupling agent such as bis(3-triethoxysilylpropyl)disulfide, bis(3-triethoxysilylpropyl)tetrasulfide, and the like; a mercapto-based silane coupling agent such as 3-mercaptopropyltrimethoxysilane, 3-mercaptopropyltriethoxysilane, 2-mercaptoethyltrimethoxysilane, 2-mercaptoethyltriethoxysilane, and the like; a vinyl-based silane coupling agent such as vinyltriethoxysilane, vinyltrimethoxysilane, and the like; an amino-based silane coupling agent such as 3-aminopropyltriethoxysilane, 3-aminopropyltrimethoxysilane, 3-(2-aminoethyl)aminopropyltriethoxysilane, and the like; a glycidoxy-based silane coupling agent such as γ-glycidoxypropyltriethoxysilane, γ-glycidoxypropyltrimethoxysilane, and the like; a nitro-based silane coupling agent such as 3-nitropropyltrimethoxysilane, 3-nitropropyltriethoxysilane, and the like; a chloro-based silane coupling agent such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Industries AG, Momentive Performance Materials, etc. can be used. The silane coupling agents may be used alone, or two or more thereof may be used in combination.

A content of a silane coupling agent is preferably greater than 5 parts by mass, more preferably greater than 7 parts by mass, based on 100 parts by mass of silica, from the viewpoint of enhancing dispersibility of silica. Moreover, it is preferably less than 15 parts by mass, more preferably less than 10 parts by mass, further preferably less than 9 parts by mass, from the viewpoints of cost and processability.

A content of a silane coupling agent based on 100 parts by mass of the rubber component is preferably greater than 2 parts by mass, more preferably greater than 3 parts by mass, further preferably greater than 4 parts by mass, from the viewpoint of enhancing dispersibility of silica. Moreover, it is preferably less than 12 parts by mass, more preferably less than 10 parts by mass, further preferably less than 8 parts by mass, from the viewpoint of preventing deterioration of abrasion resistance.

(Other compounding agents)

Compounding agents conventionally and commonly used in the tire industry, such as, for example, a plasticizing agent, processing aid, a vulcanized rubber particle, wax, stearic acid, an antioxidant, zinc oxide, a vulcanizing agent, a vulcanization accelerator, and the like, can appropriately be compounded in the rubber composition, in addition to the rubber component and the filler.

<<Plasticizing agent>>

The plasticizing agent is a material giving a rubber component plasticity and includes both a plasticizing agent that is in a liquid state at 25°C and a plasticizing agent that is solid at 25°C. Examples of the plasticizing agent include a resin, oil, a liquid polymer, an ester-based plasticizing agent, and the like. These plasticizing agents may be ones derived from mineral resources such as petroleum, natural gas, and the like, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

• Resin

The rubber composition preferably comprises resin as a plasticizing agent. Resin is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resins may be used alone, or two or more thereof may be used in combination. Each resin may also be used alone, or two or more thereof may be used in combination, respectively.

C9-based resin

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

C5-based resin

A "C5-based resin" refers to a resin obtained by polymerizing C5 fractions and may be one obtained by hydrogenating or modifying it. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

C5/C9-based resin

A "C5/C9-based resin" refers to a resin obtained by copolymerizing the C5 fraction and the C9 fraction and may be one obtained by hydrogenating or modifying it. As the C5/C9-based petroleum resin, for example, those commercially available from Tosoh Corporation, Zibo Luhua Hongjin New Material Group Co., Ltd, etc. can be used.

Dicyclopentadiene-based resin

A "dicyclopentadiene-based resin" refers to a resin comprising cyclopentadiene (CPD) and/or dicyclopentadiene (DCPD) as a monomer component having the largest content and may be one obtained by hydrogenating or modifying it. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

Aromatic vinyl-based resin

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying it. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

Coumarone-based resin

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

Indene-based resin

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

Terpene-based resin

A "terpene-based resin" refers to a resin comprising a terpene compound such as $\alpha$-pinene, $\beta$-pinene, limonene, dipentene, and the like as a monomer component, and may be one obtained by hydrogenating or modifying it. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

Rosin-based resin

A "rosin-based resin" refers to a resin comprising a rosin acid compound such as abietic acid, neoabietic acid, palustric acid, isopimaric acid, and the like, and may be one obtained by hydrogenating or modifying it. Example of the rosin-based resin include, but not particularly limited to, for example, a natural resin rosin, a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

Phenol-based resin

A "phenol-based resin" refers to a resin comprising a phenolic compound such as phenol, cresol, and the like as a monomer component, and may be one obtained by hydrogenating or modifying it. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A softening point of resin is preferably 60°C or higher, more preferably 70°C or higher, further preferably 80°C or higher, from the viewpoints of processability, improvement in dispersibility of a filler in a rubber component, etc. On the other hand, it is preferably 150°C or lower, more preferably 140°C or lower, further preferably 130°C or lower. Besides, the softening point of resin is measured by the above-described measuring method.

A content of resin when compounded based on 100 parts by mass of the rubber component is preferably 2 parts by mass or more, more preferably 5 parts by mass or more, further preferably 8 parts by mass or more. On the other hand, the content is preferably 30 parts by mass or less, more preferably 20 parts by mass or less, further preferably 15 parts by mass or less.

• Oil

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may also be used. The oils may be used alone, or two or more thereof may be used in combination.

In the present specification, "mineral oil" refers to oil derived from mineral resources such as petroleum, natural gas, and the like. Examples of mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like. The mineral oils may be used alone, or two or more thereof may be used in combination.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at 25°C. The vegetable oils may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol derived therefrom, and the like.

A content of oil when compounded based on 100 parts by mass of the rubber component is preferably greater than 5 parts by mass, more preferably greater than 10 parts by mass, further preferably 15 parts by mass or more, particularly preferably 20 parts by mass or more. Moreover, the content is preferably less than 80 parts by mass, more preferably less than 60 parts by mass, further preferably 40 parts by mass or less. Besides, the content of oil shall also include an amount of oil contained as an extending oil in a rubber component or oil contained in another component such as sulfur and the like.

• Liquid polymer

A liquid polymer is a polymer in a liquid state at 25°C, examples of which include, for example, a liquid diene-based polymer, and the like. Examples of the liquid diene-based polymer include a liquid styrene-butadiene copolymer (liquid SBR), a liquid butadiene polymer (liquid BR), a liquid isoprene polymer (liquid IR), a liquid styrene-isoprene copolymer (liquid SIR), and the like. A number average molecular weight (Mn) of the liquid diene-based polymer, which is measured with a gel permeation chromatography (GPC) and calculated in terms of polystyrene, is preferably greater than 1000, more preferably greater than 3000. On the other hand, the Mn is preferably less than 100000, more preferably less than 15000. A Mn of the liquid polymer is a value measured with a gel permeation chromatography (GPC) and calculated in terms of polystyrene. As a liquid diene-based polymer, for example, products from Sartomer, Kuraray Co., Ltd., etc. can be used. The liquid polymer may be used alone, or two or more thereof may be used in combination.

• Ester-based plasticizing agent

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

A total content of plasticizing agents based on 100 parts by mass of the rubber component is preferably 25 parts by mass or more, more preferably 30 parts by mass or more, further preferably 35 parts by mass or more. Moreover, the total content of plasticizing agents based on 100 parts by mass of the rubber component is preferably 100 parts by mass or less, more preferably 80 parts by mass or less, further preferably 60 parts by mass or less.

<<Processing aid>>

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. The processing aid may be used alone, or two or more thereof may be used in combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

<<Vulcanized rubber particle>>

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle is not particularly limited and may be a non-modified vulcanized rubber particle or a modified vulcanized rubber particle. As a commercially available product of a vulcanized rubber, for example, products manufactured by Lehigh Technologies, Muraoka Rubber Reclaiming Co., Ltd. etc. can be used. The vulcanized rubber particle may be used alone, or two or more thereof may be used in combination.

## <<Wax>>

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

## <<Stearic acid>>

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 7 parts by mass, further preferably less than 5 parts by mass, from the viewpoint of vulcanization rate.

## <<Antioxidant>>

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha,\alpha'$-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably 1.0 parts by mass or more. On the other hand, the content is preferably less than 7.0 parts by mass, more preferably less than 6.0 parts by mass, further preferably less than 5.0 parts by mass.

## <<Zinc oxide>>

A content of zinc oxide when compounded based on 100 parts by mass of the rubber component is preferably greater than 0.8 parts by mass, more preferably greater than 1.0 parts by mass, further preferably 2.0 parts by mass or more, from the viewpoint of processability. On the other hand, the content is preferably less than 10 parts by mass, more preferably less than 7 parts by mass, further preferably less than 5 parts by mass, from the viewpoint of abrasion resistance.

## <<Vulcanizing agent>>

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, it is preferable that sulfur is used. The vulcanizing agent can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A known organic crosslinking agent can also be used as a vulcanizing agent. Although the organic crosslinking agent is not particularly limited as long as it can form a crosslinking chain other than polysulfide bond, examples of the organic crosslinking agent include, for example, an alkylphenol-sulfur chloride condensate, sodium hexamethylene-1,6-bisthiosulfate dihydrate, 1,6-bis(N,N'-dibenzylthiocarbamoyldithio)hexane, dicumyl peroxide, and the like, and 1,6-bis(N,N'-dibenzylthiocarbamoyldithio)hexane is preferable. As these organic crosslinking agents, those commercially available from Taoka Chemical Co., Ltd., LANXESS, Flexsys, etc. can be used.

A content of a vulcanizing agent when compounded based on 100 parts by mass of the rubber component is preferably greater than 0.5 parts by mass, more preferably greater than 1.0 parts by mass, further preferably greater than 1.4 parts by mass. On the other hand, the content is preferably less than 6.0 parts by mass, more preferably less than 3.0 parts by mass, further preferably less than 2.0 parts by mass. When the content of the vulcanizing agent is within the above-described ranges, an appropriate reinforcing effect tends to be obtained. Besides, in a case where the vulcanizing agent includes a component other than sulfur like an oil-processing sulfur and the like, the content of the vulcanizing agent means a content of a sulfur component itself.

<<Vulcanization accelerator>>

A vulcanization accelerator is not particularly limited, and known vulcanization accelerators can be used, examples of which include, for example, sulfenamide-based, thiazole-based, guanidine-based, thiuram-based, thiourea-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiazole-based vulcanization accelerator, the guanidine-based vulcanization accelerator, and the thiuram-based vulcanization accelerator are preferable, the sulfenamide-based vulcanization accelerator and the thiazole-based vulcanization accelerator are more preferable, and the thiazole-based vulcanization accelerator is further preferable. As the vulcanization accelerator, for example, those manufactured and sold by Ouchi Shinko Chemical Industry Co., Ltd., Sanshin Chemical Industry Co., Ltd., etc., and the like can be used. These vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), and the like. Examples of the thiazole-based vulcanization accelerator include, for example, 2-mercaptobenzothiazole (MBT) or salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Examples of the guanidine-based vulcanization accelerator include, for example, 1,3-diphenylguanidine (DPG), diorthotrilguanidine, orthotrilbiguanidine, and the like. Examples of the thiuram-based vulcanization accelerator include, for example, tetramethylthiuram monosulfide, tetramethylthiuram disulfide, tetrabenzylthiuram disulfide (TBzTD), and the like.

A content of a vulcanization accelerator based on 100 parts by mass of the rubber component is preferably greater than 1.0 parts by mass, more preferably greater than 2.0 parts by mass, further preferably greater than 2.5 parts by mass. On the other hand, the content is preferably less than 8.0 parts by mass, more preferably less than 7.0 parts by mass, further preferably less than 6.0 parts by mass. When the content of the vulcanization accelerator is within the above-described ranges, breaking strength and elongation tend to be able to be secured.

In the present specification, various materials each comprising a carbon atom (for example, a rubber, oil, resin, a vulcanization accelerator, an antioxidant, a surfactant, and the like) may be derived from carbon dioxide in the atmosphere. As a method of obtaining compounds relating to the present embodiment from carbon dioxide, carbon dioxide may be directly converted, or methane obtained through a methanation step for synthesizing methane from carbon dioxide may be converted.

The rubber composition relating to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and vulcanization accelerators; and a final kneading (F-kneading) step of adding the vulcanizing agent and the vulcanization accelerators to the kneaded product obtained in the base kneading step and kneading them. Additionally, the base kneading step can also be divided into multiple steps as necessary. In a case of the division of the base kneading step, a method of dividing the base kneading step may be: (1) a method of previously kneading a part of compounding agents and additives into a masterbatch and then adding the remaining compounding agents and additives to the obtained masterbatch to knead them; (2) a method of kneading all of compounding agents and additives to be kneaded in the base kneading step at once, and then remilling the kneaded product one or more times; or the like. In the above-described method (1), the number of masterbatches is not limited and may be two or more. Moreover, when the number of masterbatches is two or more, all of compounding agents and additives used in the base kneading step may be allocated to any of the masterbatches.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

A pneumatic tire relating to the present embodiment can be produced by a usual method using an unvulcanized rubber composition obtained by the above-described method. That is, first, an unvulcanized rubber composition is extruded into a shape of a cap tread to obtain an unvulcanized cap tread. The unvulcanized cap tread thus obtained is attached together with other tire members such as a base tread and the like on a tire forming machine by a usual method to form an unvulcanized tire. In this case, Ga, Gb, and a structure of a carcass cord are configured to become predetermined ones. Moreover, as necessary, a reinforcing layer is configured to have a predetermined structure. The unvulcanized tire thus obtained is heated and pressurized in a vulcanizing machine, whereby the pneumatic tire relating to the present embodiment can be produced. Examples of vulcanization conditions include, but not particularly limited to, for example, a method of vulcanizing at 150°C to 200°C for 10 to 40 minutes.

<Applications>

The pneumatic tire relating to the present embodiment can be used for any application and can be used as a tire for a passenger car, a tire for a large passenger car, a tire for a large SUV, a racing tire, a motorcycle tire, a heavy-duty tire, or a run-flat tire. Besides, the "tire for a passenger car" refers to a tire that is presupposed to be mounted to a vehicle running with four wheels and that has a maximum load capacity of less than 1400 kg. Moreover, the "heavy-duty tire" refers to a tire having a maximum load capacity of 1400 kg or more. Moreover, in the present specification, the tire can be used as an all-season tire and a summer tire, as well as a winter tire such as a studless tire and the like.

EXAMPLE

Hereinafter, examples considered to be preferable in implementing the present invention (Examples) will be described, though the scope of the present invention is not limited to only these Examples. Results, which are calculated based on evaluation methods described below considering a tire having a cap tread and a tire structure, the tire being obtained in accordance with each Tables using various chemicals described below, are shown in the lower part of each Table.

<Various chemicals>

Various chemicals used in Examples and Comparative examples are collectively shown below.

IR-based rubber: NR (TSR20)
SBR: SBR produced by the following Production example (S-SBR, Tg: -45°C, styrene content: 30% by mass, vinyl content: 22 mol%, Mw: 900000, non-oil-extended)
BR: Ubepol BR150B manufactured by UBE Corporation (unmodified BR, cis content: 96 mol%, Mw: 440000)
Carbon black: SHOW BLACK N220 manufactured by Cabot Japan K.K. ($N_2SA$: 111 $m^2$/g, average primary particle size: 22 nm)
Silica: Ultrasil VN3 manufactured by Evonik Industries AG ($N_2SA$: 175 $m^2$/g, average primary particle size: 18 nm)
Coupling agent (silane coupling agent): Si266 manufactured by Evonik Industries AG (bis(3-triethoxysilylpropyl) disulfide)
Resin: SYLVARES SA85 manufactured by Kraton Corporation (aromatic vinyl-based resin (copolymer of $\alpha$-methyl-styrene and styrene), softening point: 85°C)
Oil: VivaTec 500 manufactured by H&R Group (TDAE oil)
Wax: OZOACE 0355 manufactured by Nippon Seiro Co., Ltd. (paraffin wax)

Antioxidant 1: Antigen 6C manufactured by Sumitomo Chemical Co., Ltd. (N-(1,3-dimethylbutyl)-N'-phenyl-p-phenylenediamine)

Antioxidant 2: Nocrac RD manufactured by Ouchi Shinko Chemical Industry Co., Ltd., (poly(2,2,4-trimethyl-1,2-dihydroquinoline))

Stearic acid: Bead stearic acid "CAMELLIA" manufactured by NOF CORPORATION

Zinc oxide: Ginrei R manufactured by Toho Zinc Co., Ltd.

Sulfur: HK-200-5 manufactured by Hosoi Chemical Industry Co., Ltd. (5% oil-containing powdered sulfur)

Vulcanization accelerator 1: Nocceler CZ-G manufactured by Ouchi Shinko Chemical Industry Co., Ltd. (N-cyclohexyl-2-benzothiazolylsulfenamide (CBS))

Vulcanization accelerator 2: Nocceler D manufactured by Ouchi Shinko Chemical Industry Co., Ltd. (1,3-diphenylguanidine (DPG))

(Production example 1: production of SBR)

Cyclohexane, tetrahydrofuran, styrene, and 1,3-butadiene are charged into an autoclave reactor subjected to nitrogen purge. A ratio of styrene and 1,3-butadiene is adjusted so that a styrene content is 30% by mass. After adjusting the temperature of the contents in the reactor to 20°C, n-butyllithium is added to initiate polymerization. Polymerization is performed under an adiabatic condition, and the temperature reaches 80°C of the maximum temperature. After confirming production of a polymer having a Mw of 900000 by GPC, a polymerization solution is poured into 4L of ethanol to collect a precipitate. After blow-drying the obtained precipitate, it is dried under reduced pressure at 80°C/10 Pa or lower until a drying loss becomes 0.1% to obtain an SBR.

<Examples and Comparative examples>

According to a compounding formulation shown in each Table, using a 1.7 L closed Banbury mixer, chemicals other than sulfur and vulcanization accelerators are kneaded for 5 minutes until a temperature reaches a discharge temperature at 160°C to obtain a kneaded product. Next, the sulfur and vulcanization accelerators are added to the obtained kneaded product, and the mixture is kneaded using a twin-screw open roll for 4 minutes until the temperature reaches 105°C to obtain an unvulcanized rubber composition for cap tread.

The obtained unvulcanized rubber composition is extruded into a shape of a cap tread with an extruder equipped with a mouthpiece having a predetermined shape, which is then attached together with other tire members while adjusting it to have a predetermined tire structure, to prepare an unvulcanized tire. The obtained unvulcanized tire is press-vulcanized under a condition at 150°C for 35 minutes, thereby producing each test tire (tire size: 225/45R17).

Tire structures in each Table are explained. In tires in Table 1, $A_1$ is +75° and $A_2$ is +85° for an inclination angle of a carcass cord, a groove depth Ga of a circumferential main groove is 6.0 mm, and a groove depth Gb of a deepest part of a groove other than the circumferential main groove, which is provided for land parts including tread ground-contacting ends, is 4.0 mm. Therefore, $|A_2 - A_1| = 10°$ for the inequality (1), Ga - Gb = 2.0 for the inequality (2), and $(Ga - Gb) / |A_2 - A_1| = 0.2$ for the inequality (4). Moreover, in tires in Table 2, $A_1$ is +75° and $A_2$ is +80° for an inclination angle of a carcass cord, a groove depth Ga of a circumferential main groove is 7.0 mm, and a groove depth Gb of a deepest part of a groove other than the circumferential main groove, which is provided for the land parts including the tread ground-contacting ends, is 4.0 mm. Therefore, $|A_2 - A_1| = 5°$ for the inequality (1), Ga - Gb = 3.0 for the inequality (2), and $(Ga - Gb) / |A_2 - A_1| = 0.6$ for the inequality (4).

In each Table, a value of $30°CE^*c \times |A_2 - A_1| \times (Ga - Gb)$ relating to the inequality (3) can be compared with a constant K. That is, when the value is greater than the constant K, the inequality (3) is satisfied.

<Durability>

Each test tire is mounted on a drum tester, a time taken until the tire is damaged and a speed at which the tire is damaged after the speed is gradually increased from 220 km per hour in increments of 10 km per hour in a state where a vertical load of 4.82 kN is applied to the tire are measured. Results are indicated as indexes with the reference Comparative example (which is Comparative example 1 in Table 1 or Comparative example 2 in Table 2) being as 100. The results show that the higher the numerical value is, the longer the time taken until the tire is damaged is and the more excellent durability is.

Table 1

| | Example | | | Comparative example |
|---|---|---|---|---|
| | 1 | 2 | 3 | 1 |
| Compounding amount (part by mass) | | | | |
| IR-based rubber | 15 | 15 | 15 | 15 |
| SBR | 75 | 75 | 75 | 75 |
| BR | 10 | 10 | 10 | 10 |
| Carbon black | 5 | 5 | 5 | 5 |
| Silica | 85 | 80 | 75 | 70 |
| Coupling agent | 6.8 | 6.4 | 6.0 | 5.6 |
| Resin | 10 | 10 | 10 | 10 |
| Oil | 20 | 30 | 35 | 40 |
| Wax | 2.0 | 2.0 | 2.0 | 2.0 |
| Antioxidant 1 | 3.0 | 3.0 | 3.0 | 3.0 |
| Antioxidant 2 | 1.0 | 1.0 | 1.0 | 1.0 |
| Stearic acid | 3.0 | 3.0 | 3.0 | 3.0 |
| Zinc oxide | 3.0 | 3.0 | 3.0 | 3.0 |
| Sulfur | 1.5 | 1.5 | 1.5 | 1.5 |
| Vulcanization accelerator 1 | 2.5 | 2.5 | 2.5 | 2.5 |
| Vulcanization accelerator 2 | 2.5 | 2.5 | 2.5 | 2.5 |
| 30°CE*c (MPa) | 6.5 | 4.5 | 3.8 | 3.5 |
| 30°CE*c $\times$ $\lvert A_2 - A_1 \rvert$ $\times$ (Ga - Gb) (Inequality (3)) | 130 | 90 | 76 | 70 |
| Evaluation | | | | |
| Durability | 134 | 112 | 103 | 100 |

Table 2

| | Example | | | Comparative example |
|---|---|---|---|---|
| | 4 | 5 | 6 | 2 |
| Compounding amount (part by mass) | | | | |
| IR-based rubber | 15 | 15 | 15 | 15 |
| SBR | 75 | 75 | 75 | 75 |
| BR | 10 | 10 | 10 | 10 |
| Carbon black | 15 | 15 | 15 | 15 |
| Silica | 100 | 95 | 90 | 85 |
| Coupling agent | 8.0 | 7.6 | 7.2 | 6.8 |
| Resin | 10 | 10 | 10 | 10 |
| Oil | 20 | 30 | 35 | 40 |
| Wax | 2.0 | 2.0 | 2.0 | 2.0 |
| Antioxidant 1 | 3.0 | 3.0 | 3.0 | 3.0 |
| Antioxidant 2 | 1.0 | 1.0 | 1.0 | 1.0 |
| Stearic acid | 3.0 | 3.0 | 3.0 | 3.0 |
| Zinc oxide | 3.0 | 3.0 | 3.0 | 3.0 |
| Sulfur | 1.5 | 1.5 | 1.5 | 1.5 |
| Vulcanization accelerator 1 | 2.5 | 2.5 | 2.5 | 2.5 |
| Vulcanization accelerator 2 | 2.5 | 2.5 | 2.5 | 2.5 |
| 30°CE*c (MPa) | 12.0 | 9.0 | 6.0 | 4.0 |
| 30°CE*c $\times$ $\lvert A_2 - A_1 \rvert$ $\times$ (Ga - Gb) (Inequality (3)) | 180 | 135 | 90 | 60 |

(continued)

| Evaluation | | | | | |
|---|---|---|---|---|---|
| | Durability | 170 | 147 | 119 | 100 |

REFERENCE SIGNS LIST

1. Tread
2. Sidewall
3. Bead part
3a. Bead apex
3b. Bead core
5. Cap tread
6. Base tread
7. Carcass
8. Belt
9. Band
10. Reinforcing layer
11. Circumferential main groove
12. Groove other than circumferential main groove (circumferential narrow groove)
Ga. Groove depth of deepest part of circumferential main groove
Gb. Groove depth of deepest part of groove other than circumferential main groove, which is provided for land part including tread ground-contacting end
CL. Tire center line
W. Tire width direction
C. Tire circumferential direction
P. Tire maximum width position
$A_1$. Angle at which extending direction of carcass cord inclines from tire circumferential direction at position of tire center line
$A_2$. Angle at which extending direction of carcass cord inclines from tire circumferential direction at tire maximum width position
$A_{RF}$. Angle at which extending direction of reinforcing layer cord inclines from tire circumferential direction

**Claims**

1. A pneumatic tire comprising a carcass, a reinforcing layer arranged on the outer side of the carcass in a tire radial direction, and a cap tread arranged on the outer side of the reinforcing layer in the tire radial direction,

   wherein the carcass is composed of at least one carcass ply that comprises a plurality of carcass cords and a topping rubber covering the carcass cords,
   wherein the tread comprises three or more land parts partitioned off by two or more circumferential main grooves,
   wherein each of a pair of land parts among the land parts has a groove other than the circumferential main grooves, the pair of land parts including tread ground-contacting ends, and
   wherein $A_1$, $A_2$, Ga, Gb, 30°CE*c, and K satisfy the following inequalities (1), (2), and (3), preferably a value on the right side in the inequality (2) being 0.50, more preferably 1.0, further preferably 1.5, further preferably 2.0, preferably a value of K in the inequality (3) being 80,

$$(1) \ |A_2 - A_1| > 0$$

$$(2) \ Ga - Gb > 0$$

$$(3) \ 30°CE^*c > K / \{|A_2 - A_1| \times (Ga - Gb)\} \text{ (provided that K is 73)}$$

where $A_1$ represents an angle, in degrees, at which an extending direction of carcass cord of a carcass ply on the outermost side in the tire radial direction among the carcass plies inclines from a tire circumferential direction at a position on a tire center line, $A_2$ represents an angle, in degrees, at which an extending direction of carcass cord of the carcass ply on the outermost side in the tire radial direction among the carcass ply inclines from the tire circumferential direction at a tire maximum width position, Ga represents a groove depth, in mm, of a deepest part of the circumferential main grooves, Gb represents a groove depth, in mm, of a deepest part of the grooves other than the circumferential main grooves, 30°CE*c represents a complex elastic modulus at 30°C, in MPa, of a rubber composition constituting the cap tread, and K represent a constant.

2. The pneumatic tire of claim 1, wherein K is 90, preferably 100, more preferably 110, further preferably 120, further preferably 130.

3. The pneumatic tire of claim 1 or 2, wherein the rubber composition constituting the cap tread comprises a rubber component and the rubber component comprises an isoprene-based rubber.

4. The pneumatic tire of any one of claims 1 to 3, wherein the grooves other than the circumferential main grooves are circumferential narrow grooves extending in the tire circumferential direction and groove widths of the circumferential narrow grooves are narrower than groove widths of two circumferential main grooves adjacent to the land parts including the tread ground-contacting ends.

5. The pneumatic tire of any one of claims 1 to 4, wherein $A_1$, $A_2$, Ga, and Gb satisfy the following inequality (4),

$$(4)\ (Ga - Gb) / |A_2 - A_1| > 0.1.$$

6. The pneumatic tire of any one of claims 1 to 5, wherein the rubber composition constituting the cap tread comprises resin.

7. The pneumatic tire of any one claims 1 to 6, wherein the tread comprises a base tread on the inner side of the cap tread in the tire radial direction.

8. The pneumatic tire of any one of claims 1 to 7,

wherein the reinforcing layer is composed of at least one reinforcing layer ply that comprises a plurality of reinforcing layer cords and a topping rubber covering the reinforcing layer cords, and
wherein $A_1$ is different from $A_{RF}$, where $A_{RF}$ represents an angle, in degrees, at which an extending direction of the reinforcing layer cord inclines from the tire circumferential direction in at least any of reinforcing layer plies of the reinforcing layer.

9. The pneumatic tire of claim 8, wherein the inclination direction at $A_{RF}$ from the tire circumferential direction is a direction opposite to the inclination direction at $A_1$ from the tire circumferential direction.

10. The pneumatic tire of claim 8 or 9, wherein the reinforcing layer that comprises a reinforcing layer ply in which an angle, in degrees, at which an extending direction of its reinforcing layer cord inclines from the tire circumferential direction is $A_{RF}$ is composed of one reinforcing layer ply.

11. The pneumatic tire of any one of claims 8 to 10, wherein the reinforcing layer ply in which an angle, in degrees, at which an extending direction of its reinforcing layer cord inclines from the tire circumferential direction is $A_{RF}$ is a belt ply.

12. The pneumatic tire of any one of claims 8 to 11, wherein the at least one reinforcing layer consists of a belt.

13. The pneumatic tire of any one of claims 1 to 12, wherein the carcass is composed of one carcass ply.

14. The pneumatic tire of any one of claims 1 to 12, wherein $A_2$ is +70° or higher and +90° or lower, preferably +75° or higher and +85° or lower, more preferably +80° or higher and +85° or lower, or is -70° or lower and higher than -90°, preferably -75° or lower and -85° or higher, more preferably -80° or lower and -85° or higher.

# FIG. 1

# FIG.2

# FIG. 3

# FIG.4

# FIG.5

Europäisches
Patentamt

European
Patent Office

Office européen
des brevets

# EUROPEAN SEARCH REPORT

**Application Number**

EP 25 18 5618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/249497 A1 (DELBAST ARNAUD [FR] ET AL) 10 August 2023 (2023-08-10) * paragraphs [0159] - [0168]; claims 16-30; figures 1-12 * ----- | 1-14 | INV. B60C1/00 B60C9/07 B60C9/08 B60C11/00 |
| A | EP 4 000 955 A1 (SUMITOMO RUBBER IND [JP]) 25 May 2022 (2022-05-25) * claims 1-10; figures 1-3 * ----- | 1-14 | |
| A | GB 1 102 547 A (MICHELIN & CIE) 7 February 1968 (1968-02-07) * claims 1-13; figures 1-22 * ----- | 1-14 | |

| | |
|---|---|
| | **TECHNICAL FIELDS SEARCHED (IPC)** |
| | B60C |

The present search report has been drawn up for all claims

| Place of search | Date of completion of the search | Examiner |
|---|---|---|
| Munich | 29 October 2025 | Carneiro, Joaquim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 5618

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2025

| Patent document cited in search report | | | Publication date | Patent family member(s) | | Publication date |
|---|---|---|---|---|---|---|
| US | 2023249497 | A1 | 10-08-2023 | CN | 115916555 A | 04-04-2023 |
| | | | | EP | 4164898 A1 | 19-04-2023 |
| | | | | JP | 7745572 B2 | 29-09-2025 |
| | | | | JP | 2023528647 A | 05-07-2023 |
| | | | | US | 2023249497 A1 | 10-08-2023 |
| | | | | WO | 2021250331 A1 | 16-12-2021 |
| EP | 4000955 | A1 | 25-05-2022 | CN | 114537049 A | 27-05-2022 |
| | | | | EP | 4000955 A1 | 25-05-2022 |
| | | | | JP | 7665958 B2 | 22-04-2025 |
| | | | | JP | 2022081097 A | 31-05-2022 |
| GB | 1102547 | A | 07-02-1968 | AT | 265883 B | 25-10-1968 |
| | | | | BE | 663874 A | 16-11-1965 |
| | | | | CH | 429475 A | 31-01-1967 |
| | | | | DE | 1505112 B1 | 21-09-1972 |
| | | | | ES | 312942 A1 | 01-10-1965 |
| | | | | FR | 1413102 A | 08-10-1965 |
| | | | | GB | 1102547 A | 07-02-1968 |
| | | | | GB | 1102548 A | 07-02-1968 |
| | | | | IL | 23455 A | 29-01-1969 |
| | | | | JP | S5510402 B1 | 15-03-1980 |
| | | | | LU | 48564 A1 | 10-11-1965 |
| | | | | NL | 131398 C | 29-10-2025 |
| | | | | NL | 6506196 A | 15-11-1965 |
| | | | | NO | 116747 B | 12-05-1969 |
| | | | | SE | 316094 B | 13-10-1969 |
| | | | | US | 3327753 A | 27-06-1967 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023084469 A
- WO 2021123530 A
- EP 3427975 A

- JP 6856781 B
- EP 3173251 A
- JP 2009002594 A

**Non-patent literature cited in the description**

- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193

- *Akita Prefectural University Web Journal B/2019*, vol. 6, 216-222